(19) Europäisches Patentamt
European Patent Office
Office européen des brevets

(11) Veröffentlichungsnummer : **0 356 730 B1**

# (12) EUROPÄISCHE PATENTSCHRIFT

(45) Veröffentlichungstag der Patentschrift : **21.09.94 Patentblatt 94/38**

(51) Int. Cl.$^5$ : **G09G 3/36,** G02F 1/137, G02F 1/133

(21) Anmeldenummer : **89114077.4**

(22) Anmeldetag : **31.07.89**

## (54) Verfahren und Vorrichtung zur beschleunigten Ansteuerung von Flüssigkristallzellen des DHF-Typs.

(30) Priorität : **12.08.88 CH 3051/88**

(43) Veröffentlichungstag der Anmeldung : **07.03.90 Patentblatt 90/10**

(45) Bekanntmachung des Hinweises auf die Patenterteilung : **21.09.94 Patentblatt 94/38**

(84) Benannte Vertragsstaaten : **CH DE FR GB IT LI NL**

(56) Entgegenhaltungen :
**EP-A- 0 309 774**
**FR-A- 2 532 453**
**FR-A- 2 549 265**
**US-A- 4 800 382**

(73) Patentinhaber : **F. HOFFMANN-LA ROCHE AG**
**Postfach 3255**
**CH-4002 Basel (CH)**

(72) Erfinder : **Fünfschilling, Jürg, Dr.**
**Weiherhofstrasse 138**
**CH-4054 Basel (CH)**
Erfinder : **Schadt, Martin, Dr.**
**Liestalerstrasse**
**CH-4411 Seltisberg (CH)**

(74) Vertreter : **Buntz, Gerhard et al**
**Grenzacherstrasse 124**
**Postfach 3255**
**CH-4002 Basel (CH)**

EP 0 356 730 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Ansteuerungsverfahren einer Flüssigkristallzelle des DHF (distorted helix ferroelectric)-Typs, bei der eine bestimmte Lichtdurchlässigkeit durch Anliegen einer bestimmten konstanten Haltespannung erzielt und aufrechterhalten wird und eine dafür geeignete Schaltung.

Für DHF-Zellen war es bisher üblich, so anzusteuern, dass die Zelle im linearen Bereich betrieben wird. in dem die Transmissionsänderung der Aenderung der angelegten Spannung folgt. Dies führt dann zu Schaltzeiten im Millisekunden-Bereich. Kürzere Zeiten sind in diesem Betriebsmodus nicht erreichbar, da sonst die Helix in der Zelle aufgewunden wird.

Dieser lineare Betriebsmodus erlaubt zwar Grauwerte, aber kein Multiplexen. Für den technischen Einsatz von Flüssigkristallzellen ist aber die Multiplexierfähigkeit eine wichtige Voraussetzung.

Es wurde nun überraschend gefunden. dass durch eine Ansteuerung mit einem kurzen Anfangsimpuls, gefolgt von einer konstanten, zur Aufrechterhaltung der erreichten Transmission erforderlichen Haltespannung die Schaltzeiten um einem Faktor 100 verringert werden.

Erfindungsgemäss wird demnach das Ziel der Multiplexfähigkeit bei gleichzeitiger Verfügbarkeit von Grauwerten dadurch erreicht, dass zur Aenderung der Lichtdurchlässigkeit der Zelle ein Spannungsimpuls angelegt wird, der mehrfach so hoch ist wie die Haltespannung, die zur Aufrechterhaltung der erreichten Lichtdurchlässigkeit erforderlich ist, und der eine Dauer von weniger als 100 μs aufweist, wobei das Produkt aus der Höhe des Spannungsimpulses und Impulsdauer kleiner ist als der für die Aufhebung der Helixstruktur benötigte Wert.

Eine dafür geeignete Schaltung zeichnet sich dadurch aus, dass die Zelle im Betrieb mit einem nichtlinearen Bauelement in Serie geschaltet ist.

Die so erreichbaren Zeiten sind kürzer als die von vergleichbaren sog. Lagerwall-Zellen, selbst bei Ansteuerung mit gleicher Spannung. Der Grund dafür ist, dass in der Lagerwall-Konfiguration das permanente Diplomoment, an dem das angelegte Feld angreift, am Anfang des Pulses parallel zum Feld steht und dass nur durch Direktorfluktuationen oder Oberflächeneffekte dafür gesorgt wird, dass überhaupt ein Drehmoment auf den Direktor wirkt. In der DHF-Zelle hat der Teil der Helix, der zum Effekt wesentlich beiträgt, einen grossen Winkel zwischen Direktor und Feld und erfährt sofort praktisch das volle Drehmoment.

Ebenfalls im Gegensatz zur Lagerwall-Zelle sind mit der erfindungsgemässen Ansteuerung immer noch Graustufen möglich: Ausschlaggebend für die Deformation der Helix ist die Fläche unter dem Spannungspuls, d.h. die Ladung, die auf der Zelle gespeichert wird. Durch geeignete Wahl der Amplitude und/oder der Pulszeit kann also jede gewünschte Deformation (= Transmissionsänderung der Zelle erreicht werden. Entsprechend muss dann auch die Haltespannung so gewählt werden, dass die geänderte Transmission aufrechterhalten wird.

Die konstante Haltespannung kann dabei von einem entsprechenden Signalgenerator stammen, da sie aber in dem für DHF-Zellen typischen Bereich von einigen 100 mV liegt, kann sie auch durch eine nichtlineare Kennlinie einer Diode oder eines anderen ähnlichen Bauelements erzeugt werden. Die Verwendung eines nichtlinearen Bauelements hat den Vorteil, dass man damit gleichzeitig das Multiplexen ermöglichen kann. Ebenso wird dadurch erreicht, dass bei Ansteuerung mit variablen Pulsen (Grauwerten) die Haltespannung automatisch richtig gewählt wird, da die entscheidende Grösse für die Helixdeformation die beim Anfangspuls gespeicherte Ladung auf der Zelle ist, und die Diode nur dafür sorgt, dass diese nicht abfliessen kann. Das heisst auch, dass die genaue Pulsform nicht kritisch ist.

Elektrochemisch induzierte Degradation des Flüssigkristalles wird vermieden, indem die Zelle im quadratischen Modus betrieben wird und so bipolar angesteuert wird, dass die mittlere Spannung null ist. In dieser Betriebsart ist die Polarisationsrichtung gekrenzten der Polarisatoren parallel oder senkrecht zur Helix und die Zelle dunkel bei Spannung null und hell bei positiver und bei negativer Spannung. Kritisch ist also der Hell-Zustand. Soll bei einem neuen Bild ein Bildpunkt hell bleiben, so muss man also die angelegte Spannung umpolen, um im Mittel die Spannung null zu erhalten.

Eine andere Möglichkeit besteht darin, vor jedem Impuls einen kurzen Impuls mit entgegengesetzter Polarität anzulegen. Damit wird die mittlere angelegte Spannung wieder null bzw. wird sie so zu wählen sein, dass die elektrochemischen Effekte minimalisiert werden.

Anwendung kann eine solche Zelle finden in Anzeigevorrichtungen einschliesslich Fernsehgeräten und sog. Terminals, in Druckern (Ersatz für Laserdrucker) und generell überall, wo rasche Lichtmodulatoren oder Modulatoren mit Graustufen verwendet werden können.

Im folgenden wird anhand der beiliegenden Zeichnungen ein Ausführungsbeispiel der Erfindung beschrieben.

Es zeigen

Fig.1 eine schematische Darstellung einer DHF-Zelle mit Ansteuerung

Fig.2 ein schematisches Schaltdiagramm einer möglichen Multiplexschaltung.

Die in Fig.1 gezeigte Flüssigkristallzelle 1 ist eine sog. DHF (distorted helix ferroelectric)-Zelle wie sie in der Schweizer Patentanmeldung Nr. 1555/88 vom 26. April 1988 beschrieben ist. Die Zelle 1 weist zwei parallel und im Abstand von ca. 2 µm von einander angeordnete Glasplatten 2,3 auf, die auf den voeinander zugewandten Flächen mit Elektrodensegmenten 4,5 beschichtet sind. Die Elektrodensegmente definieren einen Bildpunkt einer Flüssigkristallanzeige. Die Platten 2,3 weisen ferner auf den einander zugewandten Flächen PVA-Beschichtungen 6,7 auf, die in eine Vorzugsrichtung behandelt, z.B. gerieben sind, und so in bekannter Weise der Orientierung der Flüssigkristallmoleküle dienen. Zwischen den Platten ist eine Flüssigkristallschicht 8 angeordnet. Der Flüssigkristall ist beim vorliegenden Ausführungsbeispiel eine Mischung aus 26,1 Gew.% s-Octyl-2-[p-(octyloxy)phenyl]pyrimidin, 17,1 Gew.% 5-Octyl-2-[p-(nonyloxy)phenyl]pyrimidin, 24,5 Gew.% 5-octyl-2-[p-(decyloxy)phenyl]pyrimidin und 32,3 Gew.% des chiralen Zusatzstoffes

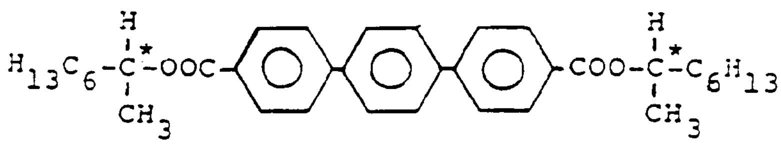

Zu den Elektrodensegmenten 4,5 führen Leiterbahnen 9,10, die in üblicher Weise mit Anschlussleitungen 11,12 verbunden sind. Diese führen zu einer Schaltung 13, die die Ansteuerimpulse liefert. In Serie mit der Zelle 1 ist eine Diodenanordnung 14 geschaltet, die aus vier paarweise antiparallelen Siliziumdioden besteht. Es können beliebige handelsübliche Dioden mit einem Sperrstrom von weniger als 1 nA verwendet werden.

Die Zelle 1 ist zwischen zwei gekreuzten Linear-Polarisatoren 15,16 angeordnet und zwar so, dass die Transmission bei maximaler negativer Haltespannung minimal ist.

Bei Ansteuerung dieser Zelle mit Impulsen von 25 V Höhe und 10 µs Dauer wird ein Kontrast von mehr als 1:10 und eine Schaltzeit von 10 µs erreicht.

Fig.2 zeigt einen Ausschnitt aus einer möglichen Multiplexschaltung für die Bildpunkte (Pixel) 17,18,19,20, die in der nachstehenden Tabelle durch ihre Adresse mit Zeilen(Z)- und Spalten(S)-Angabe definiert sind.

| S1 | S1' | S2 | S2' | Z1 | Z2 | |
|---|---|---|---|---|---|---|
| 0 | 0 | 0 | - | - | 0 | pos. Spannung am LC 17 |
| 0 | 0 | + | 0 | + | 0 | neg. Spannung am LC 17 |

Pos. bzw. neg. Spannung am LC 17 bedeutet dabei, dass die Platte auf der Seite der Dioden nach dem Schalten, wenn alle Leitungen Potential null haben, grösseres bzw. kleineres Potential hat als die Platte an der Z-Leitung.

Die Spannung des nichtlinearen Elements, bei der der Diodenstrom so klein ist. dass die Entladung während der Repetitionsperiode vernachlässigbar ist (Cut-Off-Spannung), muss dabei grösser oder gleich der maximalen Haltespannung sein. Bei dieser Multiplexschaltung sind zwei Leitungen pro Spalte und eine Leitung pro Zeile nötig. Sie erlaubt hohe Multiplexraten. Sie beruht wesentlich darauf, dass die Zelle bei Spannung null effektiv isoliert wird von den Steuerleitungen. Ist diese Cut-Off-Spannung der Diode zu klein, muss man mit vier Steuerleitungen arbeiten.

## Patentansprüche

1. Verfahren zur Ansteuerung einer Flüssigkristallzelle des DHF (distorted helix ferroelectric)-Typs, bei der eine bestimmte Lichtdurchlässigkeit durch Anlegen einer bestimmten konstanten Haltespannung erzielt und aufrechterhalten wird, dadurch gekennzeichnet, dass zur Änderung der Lichtdurchlässigkeit der Zelle an diese ein Spannungsimpuls angelegt wird, der mehrfach so hoch ist wie die Haltespannung, die zur Aufrechterhaltung der erreichten Lichtdurchlässigkeit erforderlich ist, und der eine Dauer von weniger als 100µs aufweist, wobei das Produkt aus der Höhe des Spannungsimpulses und der Impulsdauer kleiner ist als der für die Aufhebung der Helixstruktur benötigte Wert.

2. Flüssigkristallzelle des DHF (distorted helix ferroelectric)-Typs mit Ansteuermitteln zur Durchführung des

Verfahrens nach Anspruch 1, dadurch gekennzeichnet, dass die Ansteuermittel ein mit dem Flüssigkristall in Serie geschaltetes, nichtlineares Bauelement enthalten, und dass die Ansteuermittel zur Änderung der Lichtdurchlässigkeit der Zelle einen Spannungsimpuls an der Flüssigkristallzelle erzeugen, der mehrfach so hoch ist wie die Haltespannung, die zur Aufrechterhaltung der erreichten Lichtdurchlässigkeit erforderlich ist, und der eine Dauer von weniger als 100µs aufweist, wobei das Produkt aus der Höhe des Spannungsimpulses und der Impulsdauer kleiner ist als der für die Aufhebung der Helixstruktur des Flüssigkristalls erforderliche Wert.

## Claims

1. A method of driving a liquid crystal cell of the DHF (distorted helix ferroelectric) type in which a defined light transmittance is produced and maintained by applying a defined constant holding voltage, characterized in that a voltage pulse is applied to the cell in order to change its light transmittance, the voltage pulse being multiply higher than the holding voltage which is required to maintain the light transmittance produced and having a duration of less than 100 µs, and the product of the voltage amplitude pulses and pulse duration being less than the value required to nullify the helix structure.

2. A liquid crystal cell of the DHF (distorted helix ferroelectric) type having drive means for carrying out the method according to claim 1, characterized in that the drive means contains a non-linear component connected in series with the liquid crystal and generates a voltage pulse in the cell in order to change the light transmittance of the cell, the voltage pulse being multiply higher than the holding voltage which is required to maintain the light transmittance produced and having a duration of less than 100 µs, and the product of the voltage amplitude pulses and pulse duration being less than the value required to nullify the helix structure.

## Revendications

1. Procédé pour commander une cellule à cristal liquide du type DHF (distorted helix ferroeletric), dans laquelle une transmission déterminée de la lumière est obtenue et maintenue par application d'une tension de maintien constante déterminée, caractérisé en ce que pour modifier la transmission de lumière par la cellule, on applique à cette dernière une impulsion de tension, qui est égale à un multiple de la tension de maintien, qui est nécessaire pour le maintien de transmission de lumière obtenue, et qui possède une durée inférieure à 100 µs, le produit de l'amplitude de l'impulsion de tension par sa durée étant inférieur à la valeur nécessaire pour supprimer la structure en hélice.

2. Cellule à cristal liquide du type DHS (distorted helix ferroelectric) comportant des moyens de commande pour la mise en oeuvre du procédé selon la revendication 1, caractérisée en ce que les moyens de commande contiennent un composant non linéaire, branché en série avec le cristal liquide, et que, pour la modification de la transmission de lumière par la cellule, les moyens de commande appliquent une impulsion de tension à la cellule à cristal liquide, qui est égale à un multiple de la tension de maintien, qui est nécessaire pour maintenir la transmission de lumière obtenue, et possède une durée inférieure à 100 µs, le produit de l'amplitude de l'impulsion de tension par sa durée étant inférieur à la valeur nécessaire pour supprimer la structure en hélice.

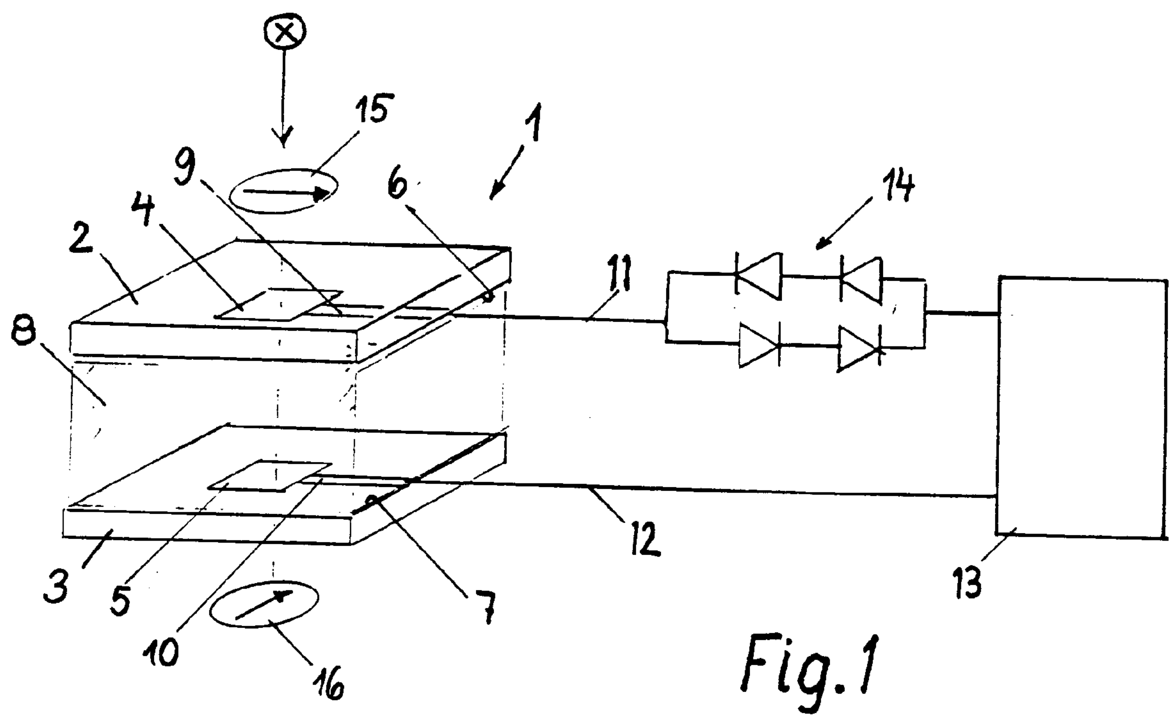


Fig.1

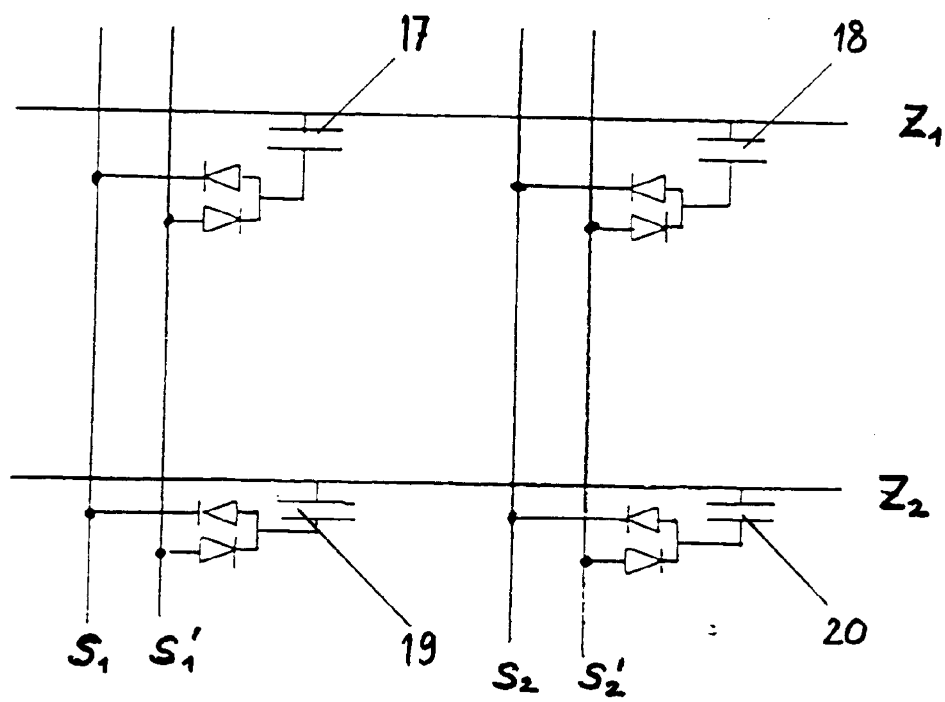


Fig.2